# EUROPEAN PATENT APPLICATION

(11) **EP 4 390 507 A1**
(43) Date of publication of application: **26.06.2024**
(21) Application number: 22858391.0
(22) Date of filing: 09.08.2022
(51) Int. Cl.: G02B 27/01, B60K 35/00, G02B 5/00

(54) **IMAGE IRRADIATION DEVICE**

(30) Priority: 20.08.2021 JP 2021135209
(71) Applicant: KOITO MANUFACTURING CO., LTD., Minato-ku, Tokyo, 108-8711 (JP)
(72) Inventor: YAJIMA, Takashi, Shizuoka-shi, Shizuoka 424-8764 (JP); IKEDA, Toshimasa, Shizuoka-shi, Shizuoka 424-8764 (JP)
(74) Representative: Cabinet Beau de Loménie
(86) International application number: PCT/JP2022/030409
(87) International publication number: WO 2023/022070

(57) **Abstract**

In an image projection device configured to project a display image on an image display board, formation of an unnecessary image in a peripheral area of the display image due to generation of stray light is effectively suppressed. A plurality of columnar protrusions 52 is formed on an inner surface 50a of a housing 50 in which an image generation unit that generates the display image is housed, and a second columnar protrusion 54 having a lower height than each of the plurality of the columnar protrusions 52 is formed. That is, even when a part of emitted light from the image generation unit, sunlight, etc. reach the inner surface 50a of the housing 50, the light that has reached the inner surface 50a is reflected multiple times between the plurality of the columnar protrusions 52 and between the plurality of the columnar protrusions 52 and the second columnar protrusions 54, which can effectively attenuate intensity of the light. This reduces a proportion of reflected light and effectively suppresses an occurrence of stray light.

## Description

### TECHNICAL FIELD

The present invention relates to an image projection device configured to project a display image on an image display board.

### BACKGROUND ART

Conventionally, an image projection device has been known as an in-vehicle image projection device. The image projection device is configured to, when disposed in a vehicle cabin, project a display image on an image display board such as a front window or a light-transmitting board disposed on a vehicle cabin side of the front window.

This image projection device has a configuration including an image generation unit that generates a display image and a housing that accommodates the image generation unit, as described in, for example, "Patent Document 1".

### Related Art Documents

### Patent Documents

Patent Document 1: Japanese Unexamined Patent Application Publication No. 2021-890 (JP 2021-890 A)

### SUMMARY OF THE INVENTION

In such an image projection device, a part of the light emitted from the image generation unit may be reflected on the inner surface of the housing, resulting in stray light reaching an image display board. Then, the stray light that has reached the image display board may cause unintended and unnecessary images to be formed in the peripheral area of a display image.

Furthermore, sunlight that has entered the vehicle cabin through the front window, etc. may enter the internal space of the housing and become stray light by being reflected on the inner surface of the housing.

Note that such a problem can similarly occur in image projection devices other than in-vehicle image projection devices.

The present invention has been made in view of the above circumstances, and it is an object of the present invention to provide an image projection device that is configured to project a display image on an image display board, and that allows effectively suppressing the formation of unnecessary images in the peripheral area of the display image due to the generation of stray light.

### Means for Solving the Problem

The present invention aims to achieve the above object by devising a configuration of a housing.

That is, an image projection device according to the present invention configured to project a display image on an image display board is characterized in that: the image projection device includes an image generation unit that generates the display image, and a housing that accommodates the image generation unit; a plurality of columnar protrusions is formed on an inner surface of the housing; and a second columnar protrusion having a lower height than each of the plurality of the columnar protrusions is formed between the plurality of the columnar protrusions.

The above "image projection device" is not particularly limited in its specific use as long as the device is configured to project the display image on the image display board. For example, applications such as an in-vehicle head-up display can be adopted.

The above "image display board" is not particularly limited in its specific configuration as long as the board is configured to project the display image. For example, the front window of a vehicle or a light-transmitting board, etc. disposed on a vehicle cabin side of the front window can be adopted.

The above "plurality of columnar protrusions" is formed on the inner surface of the housing, but a specific area where the columnar protrusions are formed is not particularly limited. The columnar protrusions may be formed in the entire area of the inner surface of the housing or in a partial area of the inner surface.

A specific height, a cross-sectional shape, etc. of each of the "plurality of columnar protrusions" are not particularly limited. For example, columnar protrusions formed in a columnar shape or a prismatic shape can be adopted.

The "second columnar protrusion" is not particularly limited in its specific height, cross-sectional shape, etc., as long as the second columnar protrusion is formed to have a lower height than each of the plurality of the columnar protrusions.

### Effects of the Invention

The image projection device according to the present invention is configured to project the display image on the image display board, and the image generation unit that generates the display image is housed in the housing. The plurality of the columnar protrusions is formed on the inner surface of the housing, and the second columnar protrusion having a lower height than each of the plurality of the columnar protrusions is formed between the plurality of the columnar protrusions. Therefore, the following effects can be obtained.

That is, even when a part of emitted light from the image generation unit reaches the inner surface of the housing, the plurality of the columnar protrusions and the second columnar protrusions are formed in a reaching area of the light. Therefore, the light that has reached the inner surface can be reflected multiple times between the plurality of the columnar protrusions and between the plurality of the columnar protrusions and the second columnar protrusions, which can effectively attenuate intensity of the light. Accordingly, a proportion of the light that reaches the inner surface of the housing and then exits as reflected light to an external space of the housing can be reduced.

Furthermore, for example, in an in-vehicle image projection device, even when sunlight that has entered the vehicle cabin through the front window, etc. enters the internal space of the housing and reaches the inner surface of the housing, with a configuration in which the plurality of the columnar protrusions and the second columnar protrusions are formed in the reaching area of the light, the light that has reached the inner surface can be reflected multiple times between the plurality of columnar protrusions and between the plurality of the columnar protrusions and the second columnar protrusions, which can effectively attenuate intensity of the light. Accordingly, the proportion of the light that reaches the inner surface of the housing and then exits as reflected light to an external space of the housing can be reduced.

Therefore, it is possible to effectively suppress the light reflected on the inner surface of the housing from becoming stray light and reaching the image display board. This makes it possible to effectively suppress the formation of unnecessary images due to stray light in the peripheral area of the display image.

Moreover, as described above, by adopting the configuration in which a plurality of the second columnar protrusions is formed together with the plurality of the columnar protrusions on the inner surface of the housing, as compared to a configuration in which only the plurality of the columnar protrusions is formed on the inner surface of the housing, the number of times that the emitted light from the image generation unit, sunlight, etc. that have reached the inner surface of the housing are reflected can be significantly increased. Accordingly, the proportion of the light that reaches the inner surface of the housing and then exits as reflected light to an external space of the housing can be significantly reduced.

In this way, according to the present invention, in the image projection device configured to project the display image on the image display board, formation of unnecessary images in the peripheral area of the display image due to the generation of stray light can be effectively suppressed.

Moreover, according to the present invention, the generation of stray light can be suppressed without applying anti-reflection coating, etc. to the inner surface of the housing, so that the cost of the image projection device can be reduced.

Furthermore, in the above configuration, when a ratio between a pitch between the plurality of the columnar protrusions and a height of each of the plurality of the columnar protrusions is set to a value of 1.5 or less, the number of times that the emitted light from the image generation unit, sunlight, etc. that have reached the inner surface of the housing are reflected between the plurality of the columnar protrusions and between the plurality of the columnar protrusions and the second columnar protrusions can be sufficiently ensured. Accordingly, a light intensity attenuation effect can be sufficiently ensured. Accordingly, the proportion of the light that reaches the inner surface of the housing and then exits as reflected light to an external space of the housing can be significantly reduced.

Furthermore, in the above configuration, when the pitch between the plurality of the columnar protrusions is set to a value of 200 µm or less and the height of each of the plurality of the columnar protrusions is set to a value of 50 µm or more, the number of times that the emitted light from the image generation unit, sunlight, etc. that have reached the inner surface of the housing are reflected between the plurality of the columnar protrusions and between the plurality of the columnar protrusions and the second columnar protrusions can be sufficiently ensured. Accordingly, a light intensity attenuation effect can be sufficiently ensured. Accordingly, the proportion of the light that reaches the inner surface of the housing and then exits as reflected light to an external space of the housing can be significantly reduced.

Furthermore, in the above configuration, when the housing is made of a resin molded product in which carbon black is dispersed, a reflectance of light reaching the inner surface of the housing can be reduced due to the presence of carbon black. Therefore, the generation of stray light can be further effectively suppressed.

Furthermore, as a configuration of the image projection device, when a reflecting mirror that reflects light emitted from the image generation unit toward the image display board is disposed in the housing, it is possible to easily guide the emitted light from the image generation unit to the image display board. On the other hand, with such a configuration, there is a risk that stray light may be generated due to the light reflected by the reflecting mirror reaching the inner surface of the housing, so that adopting the configuration of the present invention is particularly effective.

### BRIEF DESCRIPTION OF THE DRAWINGS

[FIG.1] FIG. 1 is a side sectional view showing an image projection device mounted on a vehicle according to an embodiment of the present invention.
[FIG. 2] FIG.2 is an arrow view as viewed in a direction II in FIG. 1.
[FIG. 3] FIG. 3 is a detailed view of a portion III in FIG. 1.
[FIG. 4] FIG. 4 is a detailed view of a portion IV in FIG. 3.
[FIG. 5] FIG. 5 is a detailed view of a portion V in FIG. 4.
[FIG. 6] FIG. 6 is an arrow view as viewed in a direction VI in FIG. 5.
[FIG. 7] FIG. 7 is a diagram similar to FIG. 5, showing a first modification of the above embodiment.
[FIG. 8] FIG. 8 is a diagram similar to FIG. 5, showing a second modification of the above embodiment.
[FIG. 9] FIG. 9 is a diagram similar to FIG. 6, showing a third modification of the above embodiment.

### MODES FOR CARRYING OUT THE INVENTION

An embodiment of the present invention will be described below with reference to the drawings.

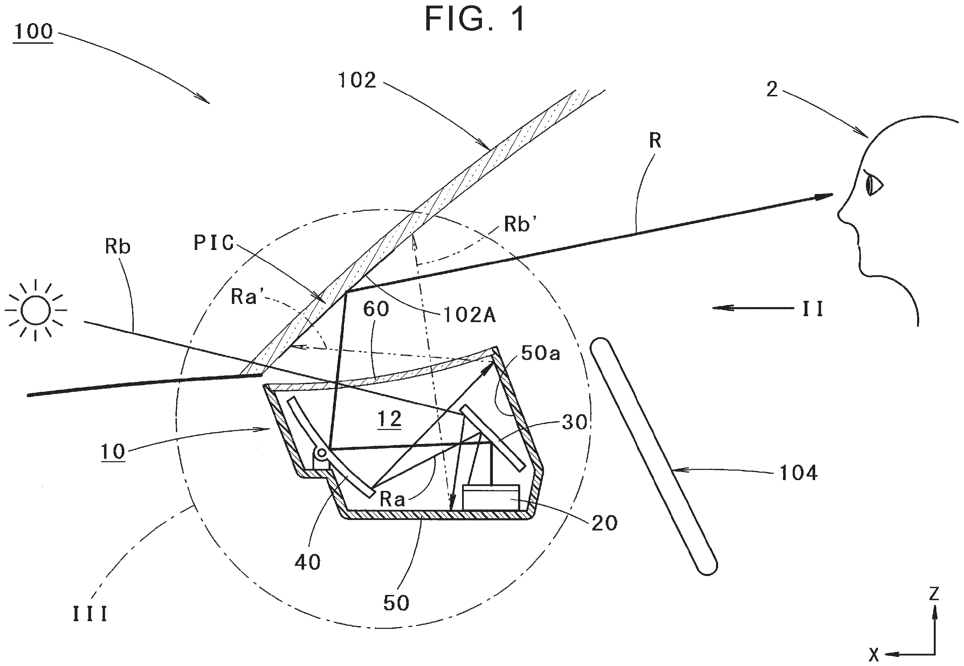

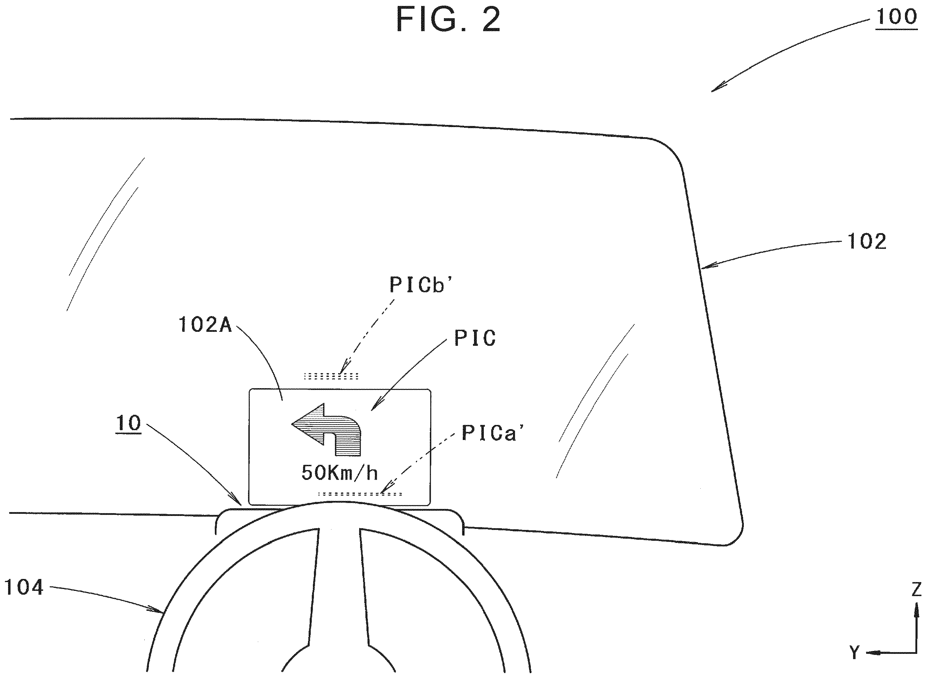

FIG. 1 is a side sectional view showing an image projection device 10 mounted on a vehicle 100 according to the embodiment. Furthermore, FIG. 2 is an arrow view of FIG. 1 as viewed in a direction II.

In these figures, a direction indicated by X is a "forward direction" in the image projection device 10 (also a "forward direction" in a vehicle), a direction indicated by Y is a "leftward direction" that is orthogonal to the "forward direction", and a direction indicated by Z is an "upward direction." The same applies to figures other than these figures.

As shown in FIGS. 1 and 2, the image projection device 10 according to the embodiment is an in-vehicle head-up display, and is configured to, when disposed in a vehicle cabin of the vehicle 100, project a display image PIC onto a display area 102A of a front window 102 serving as an image display board.

The display area 102A is set to be located in a lower area of the front window 102 and in an area in front of a steering wheel 104. This facilitates visual recognition by a driver 2 of the vehicle 100. Note that, as a specific example of the display image PIC, FIG. 2 shows a state in which a vehicle speed (50 Km/h) is displayed together with a leftward arrow.

The image projection device 10 is disposed to be located in front of the steering wheel 104 and near a lower side of the front window 102.

As shown in FIG. 1, the image projection device 10 includes: an image generation unit 20 that generates an image that is a source of the display image PIC; first and second reflecting mirrors 30, 40 that sequentially reflect light emitted from the image generation unit 20 to the display area 102A of the front window 102; a housing 50 that accommodates the image generation unit 20 and the first and second reflecting mirrors 30, 40; and a light-transmitting cover 60 attached to the housing 50.

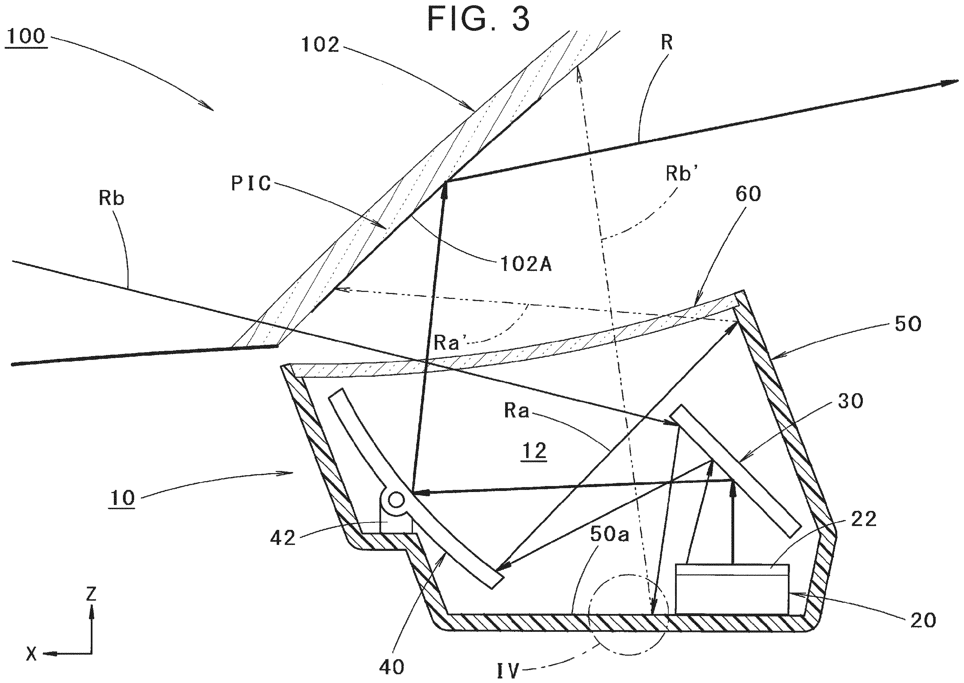

FIG. 3 is a detailed view of a portion III in FIG. 1.

As shown in FIG. 3, the image generation unit 20 includes a liquid crystal panel 22, and is mounted on a lower wall portion of the housing 50 in a rear area of an internal space 12 of the housing 50 with the liquid crystal panel 22 facing upward. The image generation unit 20 is configured to generate an image that is a source of the display image PIC on the liquid crystal panel 22 by backlighting the liquid crystal panel 22 from below.

The first reflecting mirror 30 is configured as a plane mirror and is disposed above the image generation unit 20. The first reflecting mirror 30 is configured to reflect radiated light from the image generation unit 20 in the forward direction, and is supported by the housing 50 while being positioned with respect to the image generation unit 20.

The second reflecting mirror 40 is configured as a concave mirror and is disposed in front of the first reflecting mirror 30. The second reflecting mirror 40 is configured to reflect upward the radiated light from the image generation unit 20 that has been reflected by the first reflecting mirror 30. Note that this second reflecting mirror 40 is supported by the housing 50 via a rotation support member 42, thereby allowing angle adjustment for making the reflected light from the first reflecting mirror 30 correctly enter the display area 102A of the front window 102.

The housing 50 is made of an opaque resin molded product and is open upward. This housing 50 has a configuration in which the entire area of an inner surface 50a of the housing 50 has a fine uneven structure (this will be described later).

The light-transmitting cover 60 is constituted of a colorless and transparent resin panel curved downward, and is attached to an upper end opening portion of the housing 50 in a slightly upwardly inclined state in a rearward direction. The light-transmitting cover 60 allows reflected light from the second reflecting mirror 40 to enter the display area 102A, and also ensures dust-proofness of the internal space 12 of the housing 50.

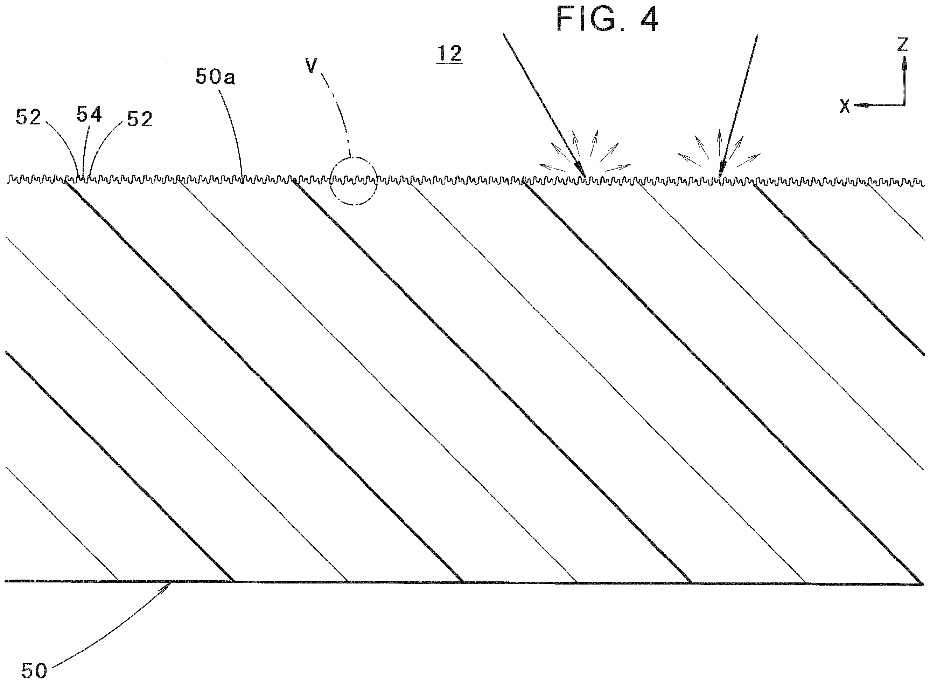

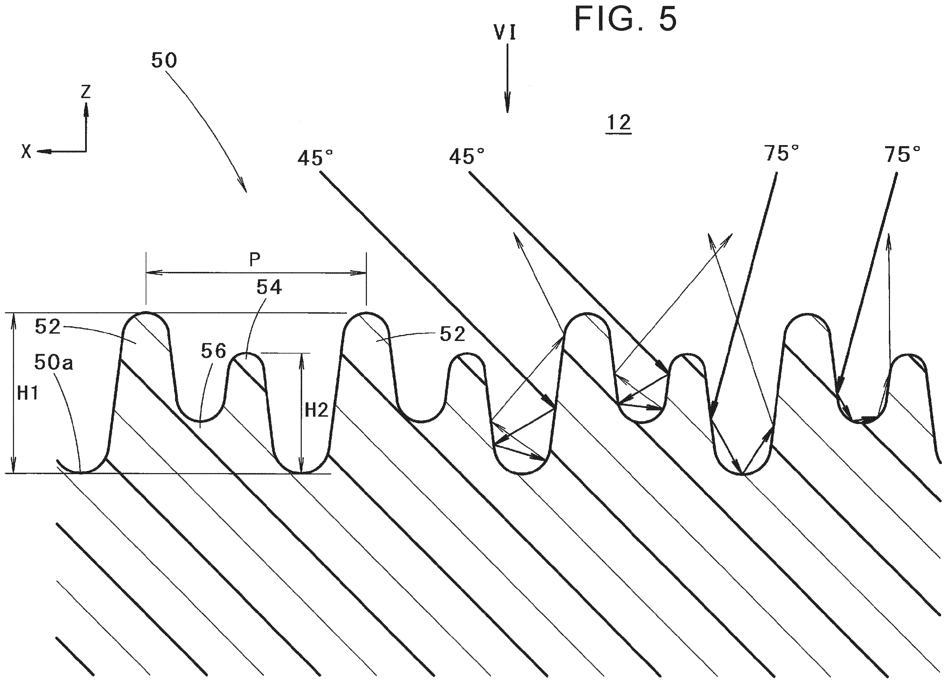

FIG. 4 is a detailed view of a portion IV in FIG. 3, and FIG. 5 is a detailed view of a portion V in FIG. 4.

As shown in FIGS. 4 and 5, a plurality of columnar protrusions 52 is formed on the inner surface 50a of the housing 50, and a second columnar protrusion 54 having a lower height than each of the plurality of columnar protrusions 52 is formed between the plurality of columnar protrusions 52.

The plurality of columnar protrusions 52 is formed at a substantially constant pitch, and is all formed to have a substantially constant height. In this case, each of the columnar protrusions 52 has a conical shape similar to a cylinder, and a tip of the columnar protrusion 52 is formed in a hemispherical shape.

A ratio between a pitch P between the plurality of columnar protrusions 52 and a height H1 of each of the plurality of columnar protrusions is set to a value of 1.5 or less. Specifically, the pitch P is set to a value P = approximately 70 to 200 µm, and the height H1 is set to a value H1 = approximately 50 to 140 µm.

Each of a plurality of the second columnar protrusions 54 is located approximately at a center of a pair of the columnar protrusions 52 located on both front and rear sides of the second columnar protrusion 54, and a connecting portion 56 connected to one of the columnar protrusions 52 is formed in a lower area of the second columnar protrusion 54.

Each of the second columnar protrusions 54 also has a conical shape similar to a cylinder, and a tip of the second columnar protrusion 54 is formed in a hemispherical shape. A height H2 of each of the second columnar protrusions 54 is set to a value H2 = approximately 0.4 to 0.8 × H1 with respect to the height H1 of each of the columnar protrusions 52. Furthermore, a diameter of each of the second columnar protrusions 54 is set to a smaller value than that of each of the columnar protrusions 52.

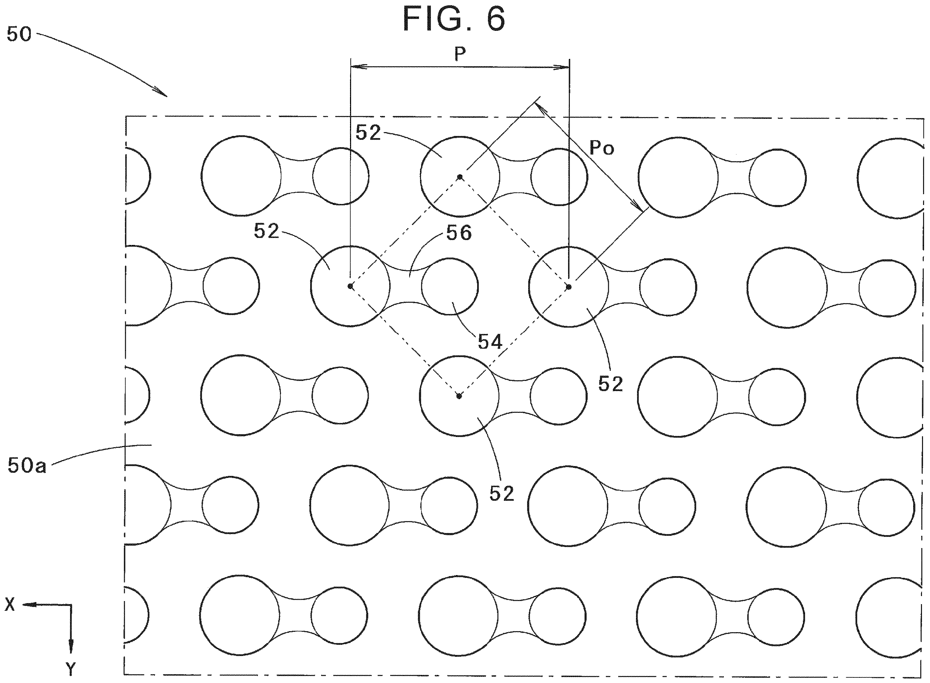

FIG. 6 is an arrow view as viewed in a direction VI in FIG. 5.

As shown in FIG. 6, the inner surface 50a of the housing 50 has a configuration in which a fine uneven structure shown in FIG. 5 is two-dimensionally expanded.

That is, the plurality of columnar protrusions 52 and the second columnar protrusions 54 having the cross-sectional shapes shown in FIG. 5 and disposed in a front-rear direction are formed in a plurality of rows at equal intervals in a left-right direction. In this case, the plurality of columnar protrusions 52 and the second columnar protrusions 54 are disposed so as to be shifted by a half pitch from mutually adjacent rows in the front-rear direction. As a result, the plurality of columnar protrusions 52 is disposed in a square diagonal lattice with the pitch P as shown by two-dotted broken lines in the figure, and the second columnar protrusion 54 is disposed approximately in a center of each lattice.

Note that the pitch P is a pitch along a diagonal line of the square diagonal lattice, and a pitch Po along sides of the square diagonal lattice has a smaller value than the pitch P.

As shown in FIG. 4, light that has reached the inner surface 50a of the internal space 12 of the housing 50 is absorbed or diffusely reflected by the inner surface 50a without being specularly reflected. This is because the inner surface 50a of the housing 50 has the above-mentioned fine uneven structure.

That is, as shown in FIG. 5, the light that has reached the inner surface 50a of the housing 50 is reflected multiple times between the columnar protrusions 52 and the second columnar protrusions 54 that are adjacent to each other. Note that FIG. 5 shows optical paths of light incident from directions inclined at 45° and 75° with respect to the inner surface 50a of the housing 50.

Furthermore, as shown in FIG. 6, since the fine uneven structure is expanded two-dimensionally, the light is reflected multiple times between the columnar protrusions 52 forming the mutually adjacent rows, and the light is also reflected multiple times between the second columnar protrusions 54.

Intensity of the light that has reached the inner surface 50a of the housing 50 is attenuated each time it is reflected, so that a proportion of the light that is ultimately reflected toward the internal space 12 of the housing 50 is extremely small. Specifically, a ratio of the total amount of reflected light to the total amount of light incident on the inner surface 50a of the housing 50 is less than 5%.

Note that the fine uneven structure (namely, the structure in which the plurality of columnar protrusions 52 is formed, and the second columnar protrusion 54 having a lower height than each of the plurality of columnar protrusions 52 is formed between the plurality of columnar protrusions 52) of the inner surface 50a of the housing 50 can be formed by grain processing. In this case, it is possible to form a transferred shape of the fine uneven structure by performing etching, laser processing, etc. on a surface of a mold for forming the housing 50. When etching the surface of the mold for forming the housing 50, it is possible to adopt a method in which etching is performed multiple times with an etching pattern shifted.

Next, optical functions of the image projection device 10 will be explained.

An optical path R shown in FIGS. 1 and 3 is an original optical path when the driver 2 visually recognizes the display image PIC projected on the display area 102A of the front window 102 by the image projection device 10.

Optical paths Ra, Rb shown in FIGS. 1 and 3 are optical paths other than the original optical path R, and are optical paths in which stray light may occur.

The optical path Ra is an optical path when, out of light emitted from the image generation unit 20, light emitted from an end area of the liquid crystal panel 22 and sequentially reflected by the first and second reflecting mirrors 30, 40 reaches an upper end area of the rear wall portion of the inner surface 50a of the housing 50.

Since the inner surface 50a of the housing 50 has the fine uneven structure as described above, the light that has reached the upper end area of the rear wall portion of the inner surface 50a is not specularly reflected. In this case, if specular reflection were to occur at the upper end area of the rear wall portion of the inner surface 50a, the light would reach a lower area of the display area 102A through the light-transmitting cover 60, as shown by an optical path Ra' indicated by a two-dotted broken line in the figure. As a result, an unnecessary image PICa' as shown in FIG. 2 is formed.

On the other hand, the optical path Rb is an optical path when sunlight that has entered the internal space 12 of the housing 50 through the front window 102 and the light-transmitting cover 60 is reflected by the first reflecting mirror 30 and reaches a lower wall portion of the inner surface 50a of the housing 50.

Since the inner surface 50a of the housing 50 has the fine uneven structure as described above, the light that has reached the lower wall portion of the inner surface 50a is not specularly reflected. In this case, if specular reflection were to occur on the lower wall portion of the inner surface 50a, the light would reach an area near and above the display area 102A in the front window 102 through the light-transmitting cover 60, as shown by an optical path Rb' indicated by a two-dotted broken line in the figure. As a result, an unnecessary image PICb' as shown in FIG. 2 is formed.

Next, effects of the embodiment will be explained.

The image projection device 10 according to the embodiment is configured to project the display image PIC on the front window 102 serving as an image display board, and the image generation unit 20 that generates the display image PIC is housed in a housing 50. The plurality of columnar protrusions 52 is formed on the inner surface 50a of the housing 50, and the second columnar protrusion 54 having a lower height than each of the plurality of columnar protrusions 52 is formed between the plurality of columnar protrusions 52. Therefore, the following effects can be obtained.

That is, even when a part of emitted light from the image generation unit 20 reaches the inner surface 50a of the housing 50, the plurality of columnar protrusions 52 and the second columnar protrusions 54 are formed in a reaching area of the light. Therefore, the light that has reached the inner surface 50a can be reflected multiple times between the plurality of columnar protrusions 52 and between the plurality of columnar protrusions 52 and the second columnar protrusions 54, which can effectively attenuate intensity of the light. Accordingly, a proportion of the light that reaches the inner surface 50a of the housing 50 and then exits as reflected light to an external space of the housing 50 can be reduced.

Furthermore, in the image projection device 10 according to the embodiment, sunlight that has entered the vehicle cabin through the front window 102 enters the internal space 12 of the housing 50 through the light-transmitting cover 60, and may reach the inner surface 50a. However, since the plurality of columnar protrusions 52 and the second columnar protrusions 54 are formed in the reaching area of the light, the light that has reached the inner surface 50a can be reflected multiple times between the plurality of columnar protrusions 52 and between the plurality of columnar protrusions 52 and the second columnar protrusions 54, which can effectively attenuate intensity of the light. Accordingly, the proportion of the light that reaches the inner surface 50a of the housing 50 and then exits as reflected light to an external space of the housing 50 can be reduced.

Therefore, it is possible to effectively suppress the light reflected from the inner surface 50a of the housing 50 from becoming stray light and reaching the display area 102A of the front window 102 through the light-transmitting cover 60. This makes it possible to effectively suppress formation of unnecessary images (see the images PICa', PICb' shown in FIG. 2) due to stray light in a peripheral area of the display image PIC.

Moreover, as in the embodiment, by adopting a configuration in which the plurality of the second columnar protrusions 54 is formed together with the plurality of columnar protrusions 52 on the inner surface 50a of the housing 50, as compared to a configuration in which only the plurality of columnar protrusions 52 is formed on the inner surface 50a of the housing 50, the number of times that the emitted light from the image generation unit 20, sunlight, etc. that have reached the inner surface 50a of the housing 50 are reflected can be significantly increased. Accordingly, the proportion of the light that reaches the inner surface 50a of the housing 50 and then exits as reflected light to an external space of the housing 50 can be significantly reduced.

According to the embodiment, in the image projection device 10 configured to project the display image PIC on the front window 102, formation of unnecessary images due to stray light in the peripheral area of the display image PIC can be effectively suppressed.

Moreover, according to the embodiment, the generation of stray light can be suppressed without applying anti-reflection coating, etc. to the inner surface 50a of the housing 50, so that the cost of the image projection device 10 can be reduced.

In this case, in the embodiment, since the ratio between the pitch P between the plurality of columnar protrusions 52 and the height H1 of each of the plurality of columnar protrusions 52 is set to a value of 1.5 or less, the number of times that the emitted light from the image generation unit 20, sunlight, etc. that have reached the inner surface 50a of the housing 50 are reflected between the plurality of columnar protrusions 52 and between the plurality of columnar protrusions 52 and the second columnar protrusions 54 can be sufficiently ensured. Accordingly, a light intensity attenuation effect can be sufficiently ensured. Accordingly, the proportion of the light that has reached the inner surface 50a of the housing 50 and then exits as reflected light to an external space of the housing 50 can be significantly reduced.

Furthermore, in the embodiment, since the pitch between the plurality of columnar protrusions 52 is set to a value of 200 µm or less and the height of each of the plurality of columnar protrusions 52 is set to a value of 50 µm or more, the number of times that the emitted light from the image generation unit 20, sunlight, etc. that have reached the inner surface 50a of the housing 50 are reflected between the plurality of columnar protrusions 52 and between the plurality of columnar protrusions 52 and the second columnar protrusions 54 can be sufficiently ensured. Accordingly, the light intensity attenuation effect can be sufficiently ensured. Accordingly, the proportion of the light that has reached the inner surface 50a of the housing 50 and then exits as reflected light to an external space of the housing 50 can be significantly reduced.

Furthermore, in the embodiment, the first and second reflecting mirrors 30, 40 are disposed in the internal space 12 of the housing 50 to sequentially reflect the light emitted from the image generation unit 20 to the display area 102A of the front window 102. This makes it possible to easily guide the emitted light from the image generation unit 20 to the display area 102A of the front window 102. In this case, there is a risk that stray light may be generated due to the light reflected by the first and second reflecting mirrors 30, 40 reaching the inner surface 50a of the housing 50, so that adopting the configuration of the embodiment is particularly effective.

In the above embodiment, the plurality of columnar protrusions 52 and the second columnar protrusions 54 are described as being formed in the entire area of the inner surface 50a of the housing 50, but a configuration is also possible in which the plurality of columnar protrusions 52 and the second columnar protrusions 54 are formed only in an area where light that causes stray light may enter.

Although the above embodiment is described as including the first and second reflecting mirrors 30, 40, a configuration including a single reflecting mirror is also possible, and alternatively a configuration not including a reflecting mirror is also possible.

In the above embodiment, each of the plurality of columnar protrusions 52 and the second columnar protrusions 54 is described as having a conical shape similar to a cylinder, but a configuration in which the each of the plurality of columnar protrusions 52 and the second columnar protrusions 54 has another shape (for example, a pyramidal shape, etc. similar to a square columnar shape or a hexagonal columnar shape) is also possible.

In the above embodiment, the image display board is described as being constituted by the front window 102, but it is also possible to constitute the image display board by a light-transmitting board, etc. disposed on a vehicle cabin side of the front window 102.

In the embodiment described above, the image projection device 10 is described as an in-vehicle head-up display, but the image projection device 10 can also be used for other purposes.

Next, modifications of the above embodiment will be described.

First, a first modification of the above embodiment will be described.

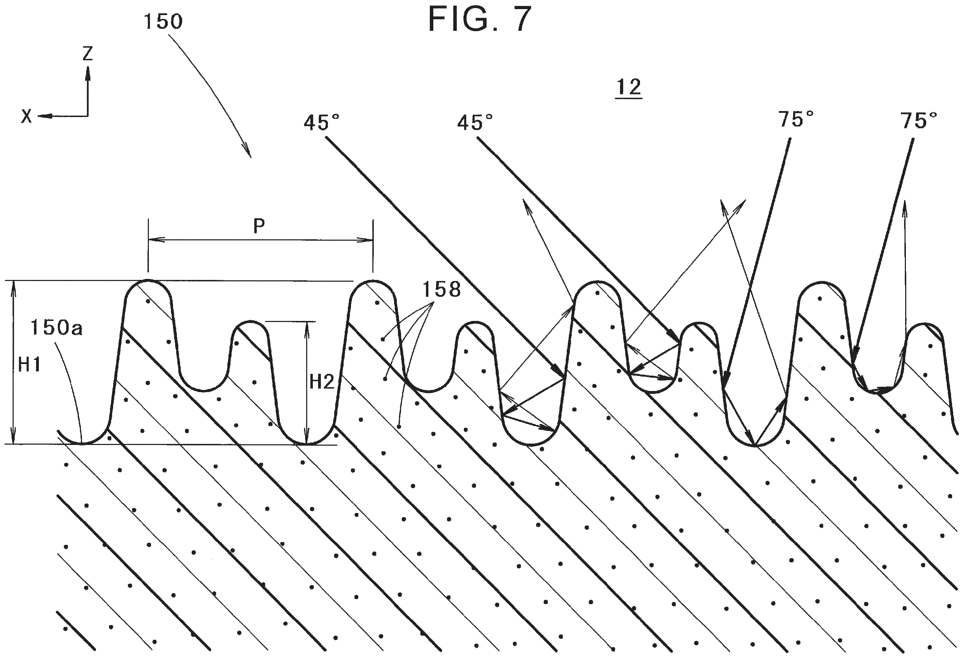

FIG. 7 is a diagram similar to FIG. 5, showing a main part of a housing 150 of an image projection device according to the modification.

As shown in FIG. 7, the housing 150 of the modification is also made of a resin molded product having the same shape as the housing 50 of the above embodiment, but is different from the above embodiment in that the housing 150 has a configuration in which carbon black 158 is dispersed.

By adopting the configuration of this modification, a reflectance of light reaching an inner surface 150a of the housing 150 can be further reduced due to the presence of the carbon black 158 than in the above embodiment, so that the generation of stray light can be further effectively suppressed.

Next, a second modification of the above embodiment will be described.

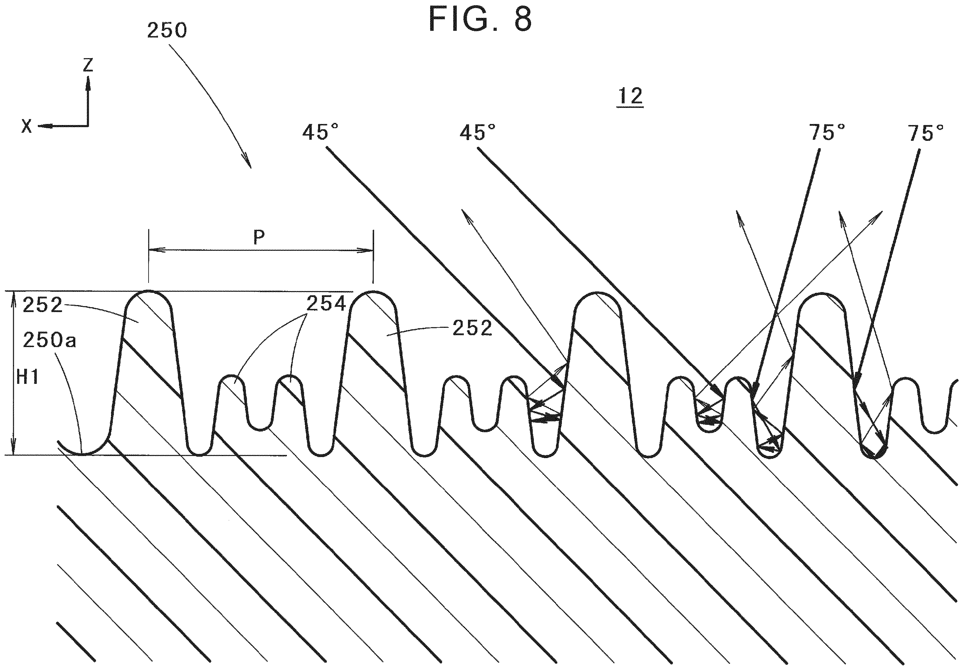

FIG. 8 is a diagram similar to FIG. 5, showing a main part of a housing 250 of an image projection device according to the modification.

As shown in FIG. 8, the housing 250 of the modification is also made of a resin molded product similar to the housing 50 of the above embodiment, but a fine uneven structure formed on an inner surface 250a of the housing 250 is partly different from that of the above embodiment.

That is, in the modification as well, a plurality of columnar protrusions 252 is formed on the inner surface 250a of the housing 250, and second columnar protrusions 254 having a lower height than each of the plurality of columnar protrusions 252 are formed between the plurality of columnar protrusions 252. The modification is different from the above embodiment in that two second columnar protrusions 254 are formed.

In this case, the plurality of columnar protrusions 252 is formed with the same pitch P and the same height H1 as in the above embodiment. On the other hand, each of the second columnar protrusions 254 is formed to have a height that is approximately half the height H1 of each of the columnar protrusions 252.

By adopting the configuration of the modification, light that has reached the inner surface 250a of the housing 250 can be more reflected, and the attenuation effect of light intensity can be enhanced, so that the generation of stray light can be further effectively suppressed.

Next, a third modification of the above embodiment will be described.

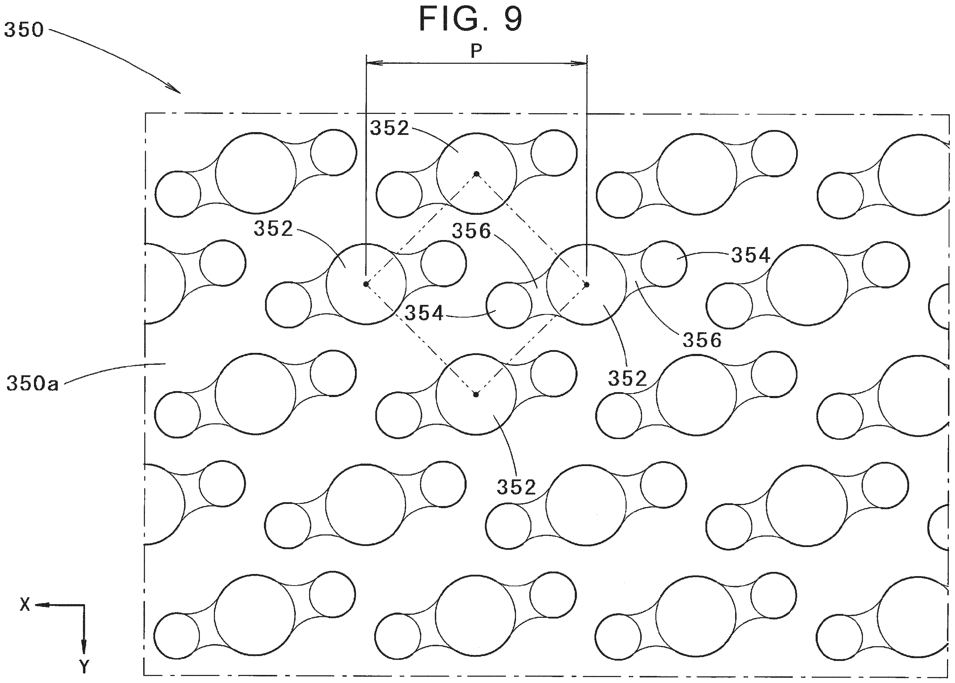

FIG. 9 is a diagram similar to FIG. 6, showing a main part of a housing 350 of an image projection device according to the modification.

As shown in FIG. 9, the housing 350 of the modification is also made of a resin molded product similar to the housing 50 of the above embodiment, but a fine uneven structure formed on an inner surface 350a of the housing 350 is partly different from that of the above embodiment.

That is, also in this modification, a plurality of columnar protrusions 352 is formed on the inner surface 350a of the housing 350 at the same pitch P as in the above embodiment, and second columnar protrusions 354 having a lower height than each of the plurality of columnar protrusions 352 are formed between the plurality of columnar protrusions 352. The modification is different from the above embodiment in that two second columnar protrusions 354 are formed.

In this case, the plurality of columnar protrusions 352 is disposed in a square diagonal lattice with the pitch P, and two second columnar protrusions 354 are disposed in each lattice.

Furthermore, two second columnar protrusions 354 are connected to each of the plurality of columnar protrusions 352 via connecting portions 356, and in this case, the connecting portions 356 extend in a direction inclined with respect to the front-rear direction.

By adopting the configuration of the modification, a configuration can be made in which the plurality of columnar protrusions 352 and the second columnar protrusions 354 are two-dimensionally disposed at a higher density. With the configuration, light that has reached the inner surface 350a of the housing 350 can be more reflected, and the attenuation effect of light intensity can be enhanced, so that the generation of stray light can be further effectively suppressed.

Note that the numerical values shown as specifications in the above embodiment and modifications thereof are merely examples, and it goes without saying that these may be set to different values as appropriate.

Furthermore, the present invention is not limited to the configurations described in the above embodiment and modifications thereof, and configurations with various other changes can be adopted.

This international application claims priority to Japanese Patent Application No. 2021-135209, which is a Japanese patent application filed on August 20, 2021. Details of Japanese Patent Application No. 2021-135209, which is the Japanese patent application, are incorporated herein by reference in its entirety.

The above descriptions of specific forms of the present invention have been presented for purposes of illustration. They are not intended to be exhaustive or to limit the present invention to the precise forms described. It will be obvious to those skilled in the art that many modifications and changes are possible in light of the above descriptions.

### Description of the Reference Numerals

2 Driver
10 Image projection device
12 Internal space
20 Image generation unit
22 Liquid crystal panel
30 First reflecting mirror
40 Second reflecting mirror
42 Rotation support member
50, 150, 250, 350 Housing
50a, 150a, 250a, 350a Inner surface
52, 252, 352 Columnar protrusion
54, 254, 354 Second columnar protrusion
56, 356 Connecting portion
60 Light-transmitting cover
100 Vehicle
102 Front window (image display board)
102A Display area
104 Steering wheel
158 Carbon black
H1, H2 Height
P, Po Pitch
PIC Display image
R, Ra, Rb Optical path

## Claims

1. An image projection device configured to project a display image on an image display board, the image projection device **characterized in that**:
the image projection device includes an image generation unit that generates the display image, and a housing that accommodates the image generation unit;
a plurality of columnar protrusions is formed on an inner surface of the housing; and
a second columnar protrusion having a lower height than each of the plurality of the columnar protrusions is formed between the plurality of the columnar protrusions.

2. The image projection device according to claim 1, **characterized in that** a ratio between a pitch between the plurality of the columnar protrusions and a height of each of the plurality of the columnar protrusions is set to a value of 1.5 or less.

3. The image projection device according to claim 1 or 2, **characterized in that**:
a pitch between the plurality of the columnar protrusions is set to a value of 200 µm or less; and
a height of each of the plurality of the columnar protrusions is set to a value of 50 µm or more.

4. The image projection device according to claim 1 or 2, **characterized in that** the housing is made of a resin molded product in which carbon black is dispersed.

5. The image projection device according to claim 1 or 2, **characterized in that** a reflecting mirror that reflects light emitted from the image generation unit toward the image display board is disposed in the housing.
